# EUROPEAN PATENT APPLICATION

(11) **EP 1 575 220 A1**
(43) Date of publication of application: **14.09.2005**
(21) Application number: 02786150.9
(22) Date of filing: 19.12.2002
(51) Int. Cl.: H04L 12/42

(54) **DATA TRANSMISSION SYSTEM, DATA TRANSMISSION METHOD, AND DATA TRANSMISSION APPARATUS**

(71) Applicant: MATSUSHITA ELECTRIC INDUSTRIAL CO., LTD., Osaka 571-8501 (JP)
(72) Inventor: HATTORI, Toshikazu, Kadoma-shi, Osaka 571-0072 (JP)
(74) Representative: Balsters, Robert
(86) International application number: PCT/JP2002/013274
(87) International publication number: WO 2004/057804

(57) **Abstract**

In a ring network shown in FIG. 1, each node is connected in a loop, and a transmission frame is transmitted in one direction in an optical transmission line (40). First, a first node (5) starts data transmission to a third node (15) using the transmission frame. At the same time, in the first node (5) to a sixth node (30), it is recognized that the first node (5) has started data transmission to the third node (15). Here, if a fourth node (20) performs data transmission to a fifth node (25), the fourth node (20) starts data transmission after it is checked that the same transmission path is not to be used. As a result, it is possible to provide a transmission system enabling effective utilization of a band of a path unrelated to a path between nodes currently performing communication in the case where communication is performed between parts of nodes.

## Description

### TECHNICAL FIELD

The present invention relates to a data transmission system, and more particularly, relates to a data transmission system in which unidirectional data transmission is performed in accordance with a predetermined protocol in a network in which a plurality of data transmission apparatus are connected in a loop.

### BACKGROUND ART

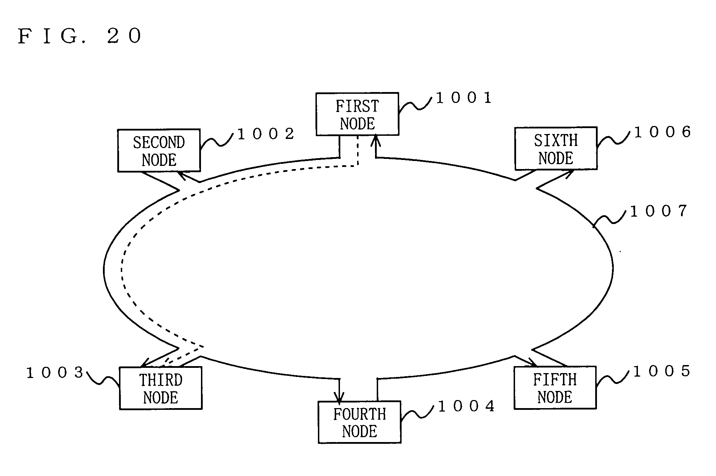

In recent years, a communication method for transmitting digitalized video, audio data, or other digital data such as computer data via a common bus line has been actively studied. As a conventional data transmission system, there is a transmission system, for example, used in Media Oriented Synchronous Transport (hereinafter, referred to as MOST) disclosed by Patrick Heck, Hervert Hetzel, Dave Knapp, Kevin Rolfes, Venkat Srinivas, Andreas Stiegler, Tony Susanto, and David Trager. Media Oriented Synchronous Transfer-A Network Protocol for High Quality, Low Cost Transfer of Synchronous, Asynchronous, and Control Data on Fiber Optic. Presented at the 103rdAES Convention, 1997 September 26-29, New York. Hereinafter, the above transmission system will be described with reference to FIG. 20.

The transmission system according to FIG. 20 includes a first node 1001, a second node 1002, a third node 1003, a fourth node 1004, a fifth node 1005, anda sixthnode 1006. Also, the respective nodes are connected in a loop by an optical transmission line 1007.

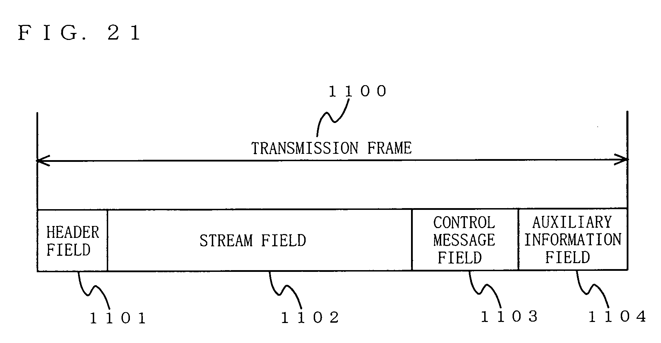

In the transmission system to which MOST is applied, as shown in FIG. 20, the respective nodes are connected in a loop, and data transmission is performed. Here, the structure of a transmission frame transmitted on a ring is shown in FIG. 21. A transmission frame 1100 shown in FIG. 21 includes a header field 1101, a stream field 1102, a control message field 1103, and an auxiliary information field 1104.

The header field 1101, which indicates a head of the frame, stores information indicating a destination of data. Actual data such as audio data and video data, etc. , is written into the stream field 1102. A control message, etc., is written into the control message field 1103. Parity, etc., is written into the auxiliary information field 1104.

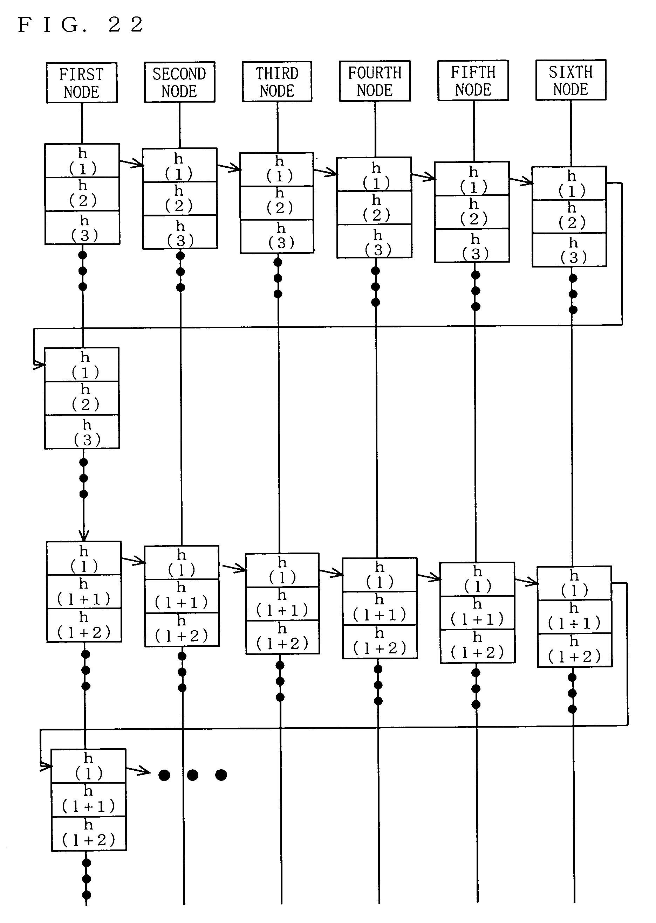

Hereinafter, a frame flow in the conventional transmission system structured as described above will be described with reference to the drawing. FIG. 22 is an illustration showing a flow of a transmission frame when actual data is transmitted from the first node 1001 to the third node 1003. Note that h (1~1+2) represent transmission frames including actual data.

First, the first node 1001 generates a transmission frame h (1), h (2), and following transmission frames, which include actual data. Next, in order to transmit the generated transmission frame to the third node 1003, the first node 1001 outputs it to the second node 1002. The second node 1002 temporarily receives the transmission frame output from the first node 1001 in order to perform processing therefor. The actual data in the transmission frame is not transmitted thereto, and therefore the second node 1002 outputs it to the third node 1003. Next, the third node 1003 receives the transmission frame output from the second node 1002. The actual data in the transmission frame is transmitted to the third node 1003. Here, the actual data in the transmission frame is transmitted to the third node 1003, and therefore the third node 1003 reads the actual data in the transmission frame, and stores it. As a result, data is transmitted from the first node 1001 to the third node 1003.

Then, the third node 1003 directly outputs the obtained transmission frame to the fourth node 1004. Here, in the fourth node through the sixth node 1006, the transmission frame is temporarily received and directly output to a next node, as is the case with the above second node 1002. As such, the transmission frame output from the first node 1001 goes around the system and returns to the first node 1001. Then, the first node 1001 rewrites the contents of the received transmission frame into the contents of the following actual data, and outputs it to the second node 1002. The following process performed in the conventional transmission system is similar to the above process. As such, in the conventional transmission system to which MOST is applied, data transmission is performed.

Here, in the above conventional transmission system to which MOST is applied, as shown in FIG. 22, a transmission frame goes around the transmission system in the case where the transmission frame is transmitted from the first node 1001 to the third node 1003. Thus, in the conventional transmission system, the transmission frame passes through the fourth node 1004 to the sixth node 1006, which are unrelated to transmission from the first node 1001 to the third node 1003. That is, in the conventional transmission system, a band between the fourth node 1004 and the sixth node 1006 is used for data transmission performed in a part of the transmission system, for example, from the first node 1001 to the third node 1003. As a result, for example, in the case where 80% of transmission rate of the transmission system is used for communication between the first node 1001 and the third node 1003, communication between the fourth node 1004 and the sixth node 1006 is allowed to be performed at a remaining 20% of transmission rate even if no communication is performed, which is a problem.

Therefore, an object of the present invention is to provide a transmission system enabling effective utilization of a band of a path unrelated to a path between nodes currently performing communication in the case where communication is performed between parts of nodes.

### DISCLOSURE OF THE INVENTION

To achieve the above objects, the present invention has the following aspects.

A first aspect of the present invention is directed to a data transmission system for transmitting data in one direction, in accordance with a predetermined protocol, in a network in which a plurality of data transmission apparatus are connected in a loop, wherein
each data transmission apparatus comprises:
recognizing means for recognizing a part of the network being used by other data transmission apparatus between a transmission source and a transmission destination in data transmission;
determining means for determining whether or not the part of the network recognized by the recognizing means coincides with a part of the network to be used by the data transmission apparatus for new data transmission between a transmission source and a transmission destination;
transmitting means for starting the new data transmission if the determining means determines that the part of the network recognized by the recognizing means does not coincide with the part of the network to be used by the data transmission apparatus for the new data transmission between the transmission source and the transmission destination.

Based on the first aspect, a plurality of data transmissions can be performed as long as the same part of the network to be used between a transmission source and a transmission destination is not used. As a result, it is possible to effectively utilize a band of the network.

Based on the first aspect, a second aspect is characterized in that each data transmission apparatus further comprises notifying means for notifying the other data transmission apparatus that it is going to start data transmission when the data transmission is started, and
the recognizing means recognizes the part of the network being used by the other data transmission apparatus between the transmission source and the transmission destination, based on a notification from the notifying means included in the other data transmission apparatus.

Based on the second aspect, each data transmission apparatus is notified that data transmission is started when the data transmission is started, whereby a current communication status of the network has been already recognized when a data transmission apparatus is going to start new data transmission. Thus, the data transmission apparatus does not have to check with each data transmission apparatus regarding a current communication status of the network when the new data transmission is started. As a result, the data transmission apparatus can quickly start the new data transmission.

Based on the second aspect, a third aspect is characterized in that the data transmission apparatus has an identification number assigned thereto for identification,
each data transmission apparatus further comprises comparing means for comparing its identification number with those of the other data transmission apparatus, based on a notification from the notifying means included in the other data transmission apparatus,
the network includes first and second data transmission apparatus,
when the notifying means of the first data transmission apparatus and the notifying means of the second data transmission apparatus concurrently notify the other data transmission apparatus that data transmission is started, the determining means of the first data transmission apparatus and the second data transmission apparatus determine whether or not a part of the network to be used by the first data transmission apparatus for data transmission between a transmission source and a transmission destination coincides with a part of the network to be used by the second data transmission apparatus for data transmission between a transmission source and a transmission destination,
when the determining means determine that the part of the network to be used by the first data transmission apparatus for data transmission between a transmission source and a transmission destination coincides with the part of the network to be used by the second data transmission apparatus for data transmission between a transmission source and a transmission destination, the comparing means of the first data transmission apparatus and the second data transmission apparatus compare which is smaller, the identification number of the first data transmission apparatus or the identification number of the second data transmission apparatus,
the transmitting means of the first data transmission apparatus or the second data transmission apparatus, which is determined that it has a smaller identification number, starts transmission of the data, and
the transmitting means of the first data transmission apparatus or the second data transmission apparatus, which is determined that it has a larger identification number, cancels transmission of the data.

Based on the third aspect, in the case where two data transmission apparatus concurrently request to start data transmission in which the same part of the network is to be used between a transmission source and a transmission destination, priority is given to data transmission whose identification number is smaller. As a result, also in this case, the system can operate normally.

Based on the first aspect, a fourth aspect is characterized in that the predetermined protocol is MOST (Media Oriented System Transport).

Based on the fourth aspect, a plurality of data transmissions can be performed also in a network to which MOST is applied as long as there is no conflict over the part to be used between a transmission source and a transmission destination. As a result, it is possible to effectively utilize a band of the network.

Based on the second aspect, a fifth aspect is characterized in that the data is embedded in a transmission frame circulating in the network in one direction for transmission.

Based on the fifth aspect, a sixth aspect is characterized in that, when the new data transmission is performed, each transmitting means of the data transmission apparatus transmits data in the transmission frames transmitted from the other data transmission apparatus after rewriting it into data to be transmitted therefrom.

Based on the sixth aspect, when new data transmission is performed, a data transmission apparatus performing the new data transmission rewrites data of a transmission frame into data to be transmitted therefrom, whereby it is possible to concurrently perform two communications also in a network in which the transmission frame circulates in one direction as long as two communication paths do not conflict with each other.

Based on the fifth aspect, a seventh aspect is characterized in that the transmission frame has a field, as a part of a field in which the data is stored, in which information used by the notifyingmeans for notifying that the data transmission is started is stored.

Based on the seventh aspect, a field for storing information used by the notifying means for notifying that the data transmission is started is provided in a field in which data is stored. Here, a field other than a field in which data is stored may be or may not be used in accordance with a transmission status, and therefore the notifying means is not always allowed to use it for notifying that the data transmission is started. Thus, a field in which the notifying means stores information for notifying that the data transmission is started is provided in a field in which data is stored, whereby the notifying means is always allowed to notify that the data transmission is started.

A eighth aspect is directed to a data transmission method for transmitting data in one direction, in accordance with a predetermined protocol, in a network in which a plurality of data transmission apparatus are connected in a loop, comprising:
a recognizing step of recognizing, in the plurality of data transmission apparatus, a part of the network being used between a transmission source and a transmission destination for data transmission;
a determining step of determining, in a data transmission apparatus which is going to start a new data transmission, whether or not the part of the network recognized at the recognizing step coincides with a part of the network to be used between a transmission source and a transmission destination for the new data transmission; and
a transmitting step at which the new data transmission is started when a determination is made at the determining step that the part of the network recognized at the recognizing step does not coincide with the part of the network to be used between a transmission source and a transmission destination for the new data transmission.

Based on the eighth aspect, a plurality of data transmissions can be performed as long as the same part of the network to be used between a transmission source and a transmission destination is not used. As a result, it is possible to effectively utilize a band of the network.

A ninth aspect is directed to a data transmission apparatus, which is one of a plurality thereof provided in a ring network, for transmitting data in one direction in accordance with a predetermined protocol, comprising:
recognizing means for recognizing a part of the ring network being used between a transmission source and a transmission destination for data transmission;
determining means for determining whether or not the part of the network recognized by the recognizing means coincides with a part of the network to be used between a transmission source and a transmission destination for new data transmission when transmission of new data is started while other data transmission apparatus perform data transmission; and
transmitting means for transmitting the new data if the determining means determines that the part of the network recognized by the recognizing means does not coincide with the part of the network to be used between a transmission source and a transmission destination for the new data transmission.

Based on the ninth aspect, a plurality of data transmissions can be performed as long as the same part of the network to be used between a transmission source and a transmission destination is not used. As a result, it is possible to effectively utilize a band of the network.

### BRIEF DESCRIPTION OF THE DRAWINGS

FIG. 1 is a block diagram showing the entire structure of a data transmission systemaccording to an embodiment of the present invention.
FIG. 2 is an illustration showing an exemplary structure of a stream field according to the embodiment of the present invention.
FIG. 3 is a block diagram showing the structure of a transmitting/receiving device according to the embodiment of the present invention.
FIG. 4 is an illustration showing an exemplary structure of a band setting table according to the embodiment of the present invention.
FIG. 5 is an illustration showing a field value of a stream field 1102 of a transmission frame.
FIG. 6 is an illustration showing a flow of a transmission frame when a first node transmits data to a third node.
FIG. 7 is an illustration showing a flow of a transmission frame when the first node transmits data to the third node.
FIG. 8 is a flowchart showing an operation performed by a transmitting/receiving device 300 of a first node 5 when a first node 5 transmits a transmission frame to a third node 15.
FIG. 9 is a flowchart showing an operation performed by the transmitting/receiving device 300 of a node other than the first node 5 when the first node 5 transmits a transmission frame to the third node 15.
FIG. 10 is an illustration showing a field value of the stream field 1102 of a transmission frame.
FIG. 11 is an illustration showing a flow of a transmission frame in the case where a fourth node 20 starts transmission of a transmission frame to a fifth node 25 while the first node 5 transmits a transmission frame to the third node 15.
FIG. 12 is an illustration showing a flow of a transmission frame in the case where the fourth node 20 starts transmission of a transmission frame to the fifth node 25 while the first node 5 transmits a transmission frame to the third node 15.
FIG. 13 is a flowchart showing an operation performed by the transmitting/receiving device of the fourth node 20 in the case where a transmission frame is transmitted from the fourth node 20 to a sixth node 30 while the first node 5 transmits a transmission frame to the third node 15.
FIG. 14 is a flowchart showing an operation performed by the transmitting/receiving device 300 of each node while communication is performed between the fourth node 20 and the fifth node 25.
FIG. 15 is an illustration showing a flow of a transmission frame in the case where the first node 5 ends transmission of a transmission frame while communication is performed between the first node 5 and the third node 15, and communication is performed between the fourth node 20 and the fifth node 25.
FIG. 16 is a flowchart showing an operation performed by the transmitting/receiving device 300 of the first node 5 in the case where the first node 5 ends transmission of a transmission frame while communication is performed between the first node 5 and the third node 15, and communication is performed between the fourth node 20 and the fifth node 25.
FIG. 17 is an illustration showing a field value of the stream field 1102 of a transmission frame.
FIG. 18 is an illustration showing a flow of a transmission frame in the case where the first node 5 transmits a transmission frame including actual data to the sixth node 30, and the fourth node 20 transmits a transmission frame including actual data to the fifth node 25.
FIG. 19 is a flowchart showing an operation performed by the first node 5 or the fourth node in the case where the first node 5 transmits a transmission frame including actual data to the sixth node 30, and the fourth node 20 transmits a transmission frame including actual data to the fifth node 25.
FIG. 20 is a block diagram showing the entire structure of a conventional data transmission system.
FIG. 21 is an illustration showing an exemplary structure of a transmission frame flowing through a data transmission system.
FIG. 22 is an illustration showing a flow of a transmission frame when data is transmitted from a first node 1001 to a third node 1003.

### BEST MODE FOR CARRYING OUT THE INVENTION

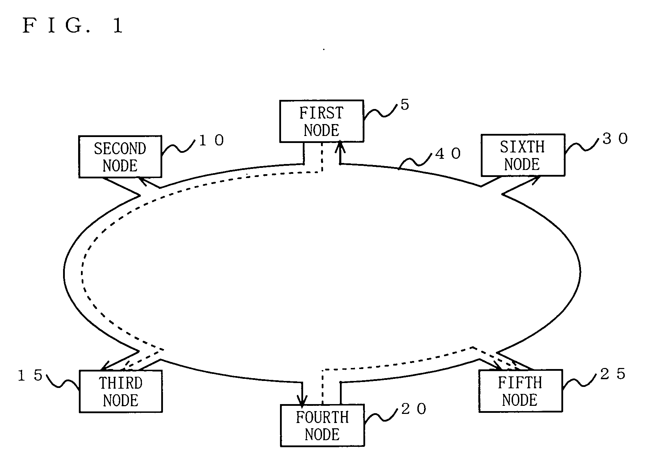

Now, hereinafter, a data transmission system according to an embodiment of the present invention will be described with reference to the drawing. FIG. 1 is a block diagram showing the entire structure of the data transmission system according to the embodiment.

The data transmission system shown in FIG. 1 includes a first node 5, a second node 10, a third node 15, a fourth node 20, a fifth node 25, and a sixth node 30. Each node is realized by a terminal such as an audio apparatus and a loudspeaker, etc., and a transmitting/receiving device, and connected to each other in a loop by an optical transmission line 40. Note that MOST is used as a communication method of the data transmission system according to the present embodiment.

Here, a transmission frame output from each node will be described. The transmission frame has a structure suitable for communications based on MOST, specifically, a structure such as that shown in FIG. 22. Here, FIG. 22 is an illustration showing an exemplary structure of the transmission frame.

The transmission frame shown in FIG. 22 includes the header field 1101, the stream field 1102, the control message field 1103, and the auxiliary information field 1104. Functions of the respective fields have been described in the BACKGROUND ART section, and therefore descriptions thereof are omitted.

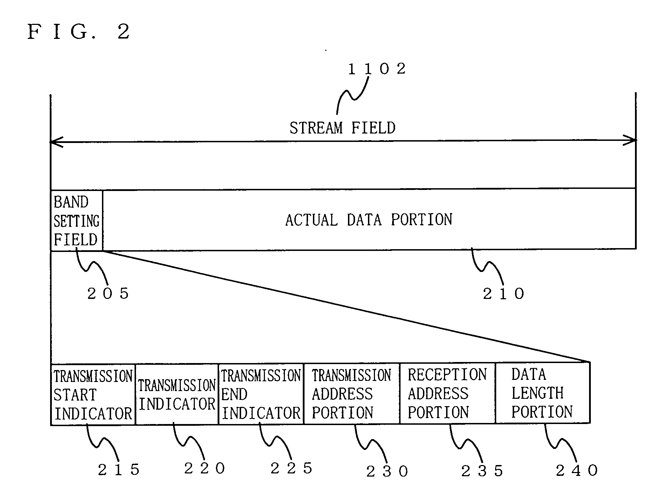

Here, the stream field 1102 according to the present embodiment will be described with reference to the drawings. FIG. 2 is an illustration showing an exemplary structure of the stream field 1102 according to the present embodiment. The stream field 1102 includes a band setting field 205 and an actual data portion 210. The band setting field 205 is a portion including information for causing each node to recognize a communication state of the data transmission system, and includes a transmission start indicator 215, a transmission indicator 220, a transmission end indicator 225, a transmission address portion 230, a reception address portion 235, and a data length portion 240.

The transmission start indicator 215 notifies each node that transmission of a transmission frame is started. More specifically, data transmission between the nodes is not started in the case where the transmission indicator 215 is 0, and data transmission between the nodes is started in the case where the transmission start indicator 215 is 1.

The transmission indicator 220 is a portion indicating that the transmission frame including actual data is transmitted in the data transmission system. More specifically, actual data is not included in the transmission frame in the case where the transmission indicator 220 is 0, and the actual data is included in the transmission frame in the case where the transmission frame is 1.

The transmission end indicator 225 notifies each node that transmission of the transmission frame including actual data is ended. More specifically, data transmission between the nodes is not ended or data transmission is not performed in the case where the transmission end indicator is 0, and data transmission between the nodes is ended in the case where the transmission end indicator is 1.

The transmission address portion 230 is a portion indicating a transmitting side node in the case where transmission is started by the transmission start indicator 215, or a transmitting side node in the case where transmission is ended by the transmission end indicator 225. On the other hand, the reception address portion 235 is a portion indicating a receiving side node in the case where transmission is started by the transmission start indicator 215 or a receiving side node in the case where transmission is ended by the transmission end indicator 225. The data length portion 240 is a portion indicating a data length of the actual data portion 210.

As such, in the data transmission system according to the present embodiment, in order to notify each node of a current communication state, the stream field 1102 has the band setting field 205 including information about a communication state in the data transmission system. That is, in the data transmission system according to the present embodiment, in general, a part of the band used for transmission of actual data is always used for transmission of information of a communication state of the data transmission system. This enables each node to notify other nodes of its communication state at any time.

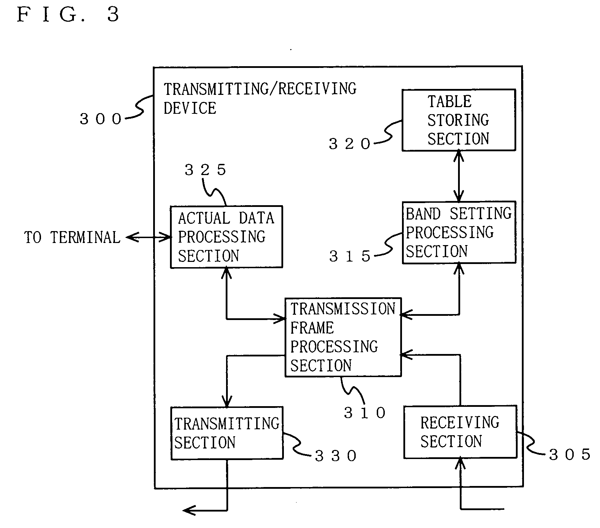

Next, the node will be described. The node includes a terminal such as an audio apparatus, etc., and a transmitting/receiving device for transmitting/receiving a transmission frame. Here, the details of the transmitting/receiving device 300, which is included in each node, will be described with reference to the drawing. FIG. 3 is a block diagram showing the structure of the transmitting/receiving device 300 according to the present embodiment. The transmitting/receiving device 300 obtains a transmission frame from its higher-order node, and outputs the transmission frame to its lower-order node. In this case, if actual data in the obtained transmission frame is actual data transmitted thereto, the transmitting/receiving device 300 obtains actual data from the transmission frame. Also, the transmitting/receiving device 300 according to the present embodiment determines whether or not communication is possible in the case where communication is started with other node while still other nodes perform communication, and notifies each node that communication is started if the communication is possible.

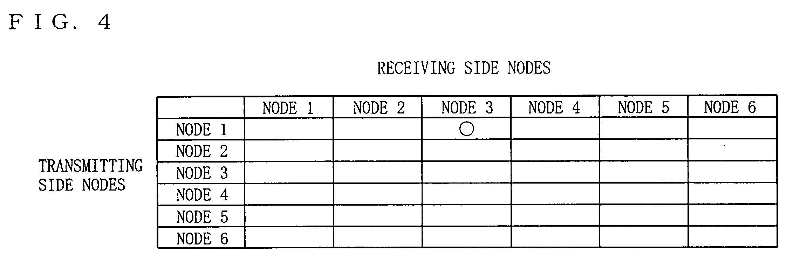

The transmitting/receiving device 300 includes a receiving section 305, a transmission frame processing section 310, a band setting processing section 315, a table storing section 320, a actual data processing section 325, and a transmitting section 330. The receiving section 305 receives a transmission frame transmitted from its upper-order node. The transmission frame processing section 310, which is realized by an MPU and a so-called MOST LSI, converts a transmission frame transmitted in MOST format into data format which can be read by the node's terminal, and separates the band setting field 205 and the actual data portion 210 of the stream field 1102. Also, the transmission frame processing section 310 generates the stream field 1102 from the band setting field 205 and the actual data portion 210, generates a transmission frame in MOST format, and outputs it to the transmitting section 330. The band setting processing section 315 is realized by an MPU, and generates the band setting field 205 based on a band setting table stored in the table storing section 320. The table storing section 320 stores a band setting table shown in FIG. 4, and it is realized by a hard disk or a memory. The actual data processing section 325, which is realized by an MPU, outputs data output from the terminal to the transmission frame processing section 310 as actual data, and outputs actual data, which is output from the transmission frame processing section 310, to the terminal. The transmitting section 330 transmits a transmission frame output from the transmission frame processing section 310 to a lower-order node.

Here, the above band setting table will be described with reference to the drawing. FIG. 4 is an illustration showing an exemplary structure of the band setting table. The band setting table is a table for managing which node currently transmits data to which node. The band setting table shown in FIG. 4, in which transmitting side nodes are described in columns and receiving side nodes are described in rows, indicates that communication is performed between a transmitting side node and a receiving side node, which are indicated by a circle in a box. More specifically, in the band setting table shown in FIG. 4, there is a circle in a box corresponding to the first node 5 of the transmitting side nodes and the third node 15 of the receiving side nodes, which indicates that the transmission frame is transmitted from the first node 5 to the third node 15.

With regard to the data transmission system whose structure is described above, an operation thereof will be described hereinafter. Note that respective processes described in the present embodiment can be realized using software of a computer, or can be realized using dedicated hardware circuits for performing the respective processes.
(a case in which the first node 5 and the third node 15 start communication)

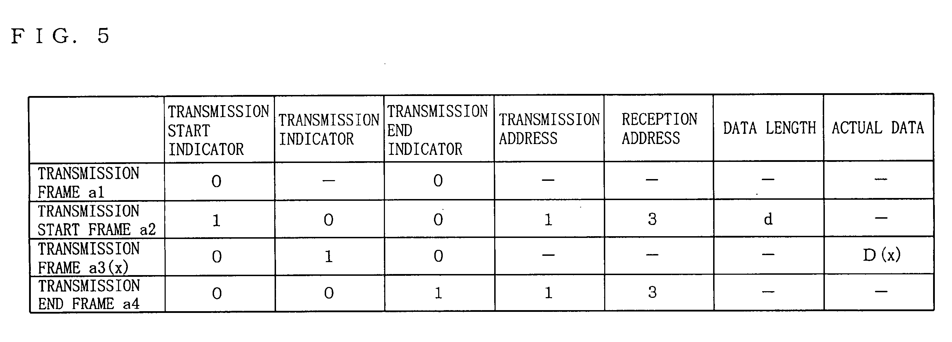

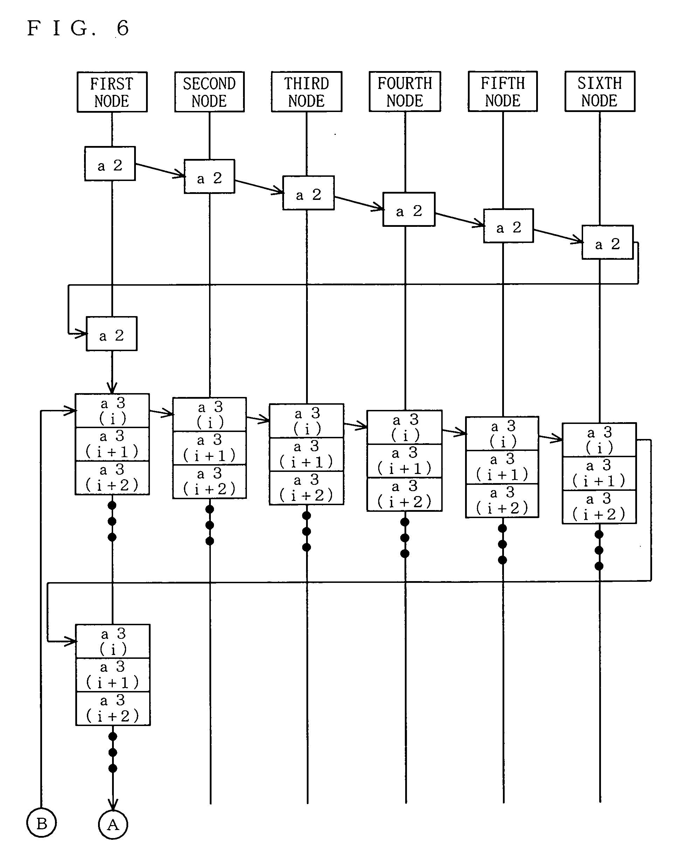

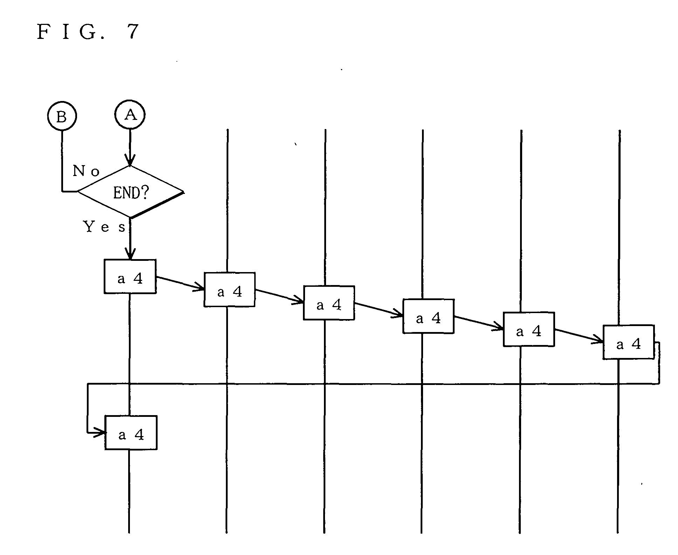

First, a case in which the first node 5 starts transmission of a transmission frame including actual data to the third node 15 will be described with reference to the drawings. FIG. 5 is an illustration showing a field value of the stream field 1102 of a transmission frame. FIGS. 6 and 7 are illustrations showing a flow of a transmission frame when the first node 5 transmits the transmission frame including actual data to the third node 15.

First, as a precondition for describing the above operation, in the data transmission system, it is assumed that a transmission frame a1 of FIG. 5 is transmitted through the nodes in a counterclockwise direction in the case where no communication is performed.

Here, when the first node 5 starts transmission of a transmission frame including actual data to the third node 15, the first node 5 checks whether the currently received node is the transmission frame a1. More specifically, the first node 5 checks whether the transmission start indicator and the transmission end indicator of the transmission frame are 0, and the transmission indicator is in a zero state.

Next, the first node 5 rewrites the transmission frame a1 into a transmission start frame a2, and outputs it to the second node 10 via the transmission frame processing section 310 and the transmitting section 330. Here, the transmission start frame a2 is a frame for notifying each node that the first node 5 is going to start transmission of a transmission frame to the third node 15. Thus, a transmission start indicator of the transmission start frame a2 is 1, a transmission address thereof is 1, and a reception address thereof is 3.

The transmission start frame a2 passes through the second node 10, the third node 15, the fourth node 20, the fifth node 25, and the sixth node 30, and returns to the first node 5. In the meanwhile, in the second node 10 to the sixth node 30, a circle is written in a box, which corresponds to the first node 5 of the transmitting side nodes and the third node 15 of the receiving side nodes in the band setting table stored in each table storing section 320.

Next, the first node 5, which has received the transmission start frame a2, writes a circle in a box, which corresponds to the first node 5 of the transmitting side nodes and the third node 15 of the receiving side nodes in the band setting table stored in its table storing section 320. As a result, each node recognizes that the first node 5 is going to transmit a transmission frame including actual data to the third node 15.

Next, the first node 5 starts transmission of a transmission frame a3 (x) (x is a natural number) including actual data. More specifically, the first node 5 writes actual data D (x) into actual data of the transmission frame output from the sixth node 30, writes 1 into the transmission indicator, and outputs it to the second node 10. Note that the fact that it is a transmission frame to be transmitted to the third node 15 is written in the header field 1101 of the transmission frame a3 (x).

The second node 10 receives the output transmission frame a3 (x). The second node 10, which has received the transmission start frame a2, recognizes that the transmission frame a3 (x) is not data transmitted thereto, and therefore directly outputs it to the third node 15.

The third node 15, which has received the transmission start frame a2, recognizes that the obtained transmission frame a3 (x) is a transmission frame transmitted thereto. Then, the third node 15 reads the actual data portion 210 included in the stream field 1102 of the transmission frame a3 (x), and outputs it to the terminal in the third node 15. As a result, the terminal in the third node 15 can obtain the actual data.

Next, the third node 15 outputs the transmission frame a3 (x) to the fourth node 20. The fourth node 20 to the sixth node 30 directly output the transmission frame a3 (x) to a next frame, as is the case with the above second node 10, because the transmission frame a3 (x) is not transmitted thereto. As a result, the transmission frame a3 (x) goes around the transmission system, and returns to the first node 5.

The first node 5 determines whether or not transmission of the transmission frame is ended. More specifically, the first node 5 determines whether or not all actual data is included in the transmission data and transmitted.

Here, if the first node 5 determines that it is not ended, the first node 5 writes next actual data into the transmission data, and outputs it to the second node 10. The following operation performed by the second node 10 to the sixth node 30 is the same as the above operation, and therefore the description thereof is omitted. Note that the first node 5 continues writing actual data into the transmission data and outputting it until the end of transmission of all actual data written into the transmission data.

On the other hand, if the first node 5 determines that it is ended, the first node 5 rewrites the obtained transmission data into a transmission end frame a4. Here, the transmission end frame a4 is a frame for notifying each node that transmission of a transmission frame, which includes actual data, from the first node 5 to the third node 15 is ended. Then, the first node 5 sets a transmission indicator and a transmission indicator of the obtained transmission frame to 0, sets a transmission end indicator to 1, sets a transmission address to 1, and sets a reception address to 3. Then, the first node 5 outputs the transmission end frame a4 to the second node 10.

The transmission end frame a4 passes through the second node 10, the third node 15, the fourth node 20, the fifth node 25, and the sixth node 30, and returns to the first node 5. In the meanwhile, in the second node 10 to the sixth node 30, a circle is deleted from the box, which corresponds to the first node 5 of the transmitting side nodes and the third node 15 of the receiving side nodes in the band setting table stored in each table storing section 320.

Next, the first node 5, which has received the transmission start frame a2, deletes a circle from the box, which corresponds to the first node 5 of the transmitting side nodes and the third node 15 of the receiving side nodes in the band setting table stored in its table storing section 320. As a result, each node recognizes that transmission of a transmission frame from the first node 5 to the third node 15 is ended. Thus, transmission of a transmission frame from the first node 5 to the third node 15 is ended.

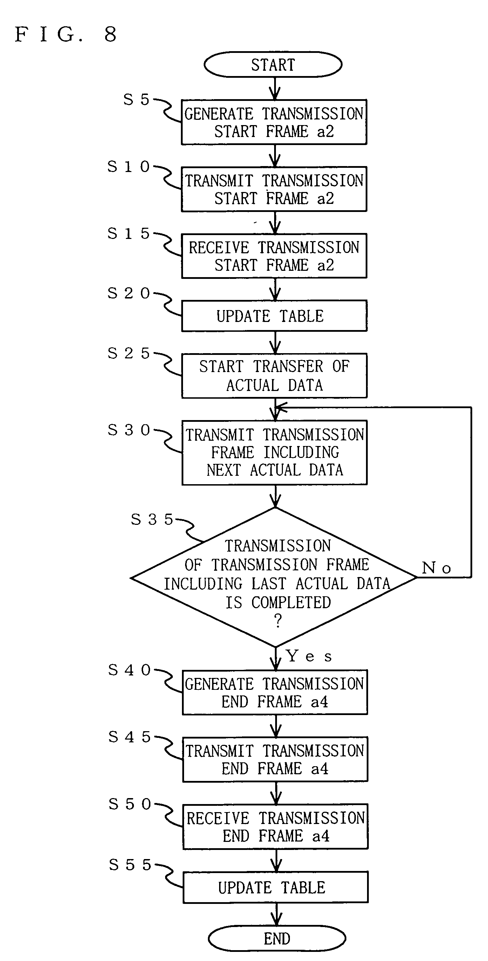

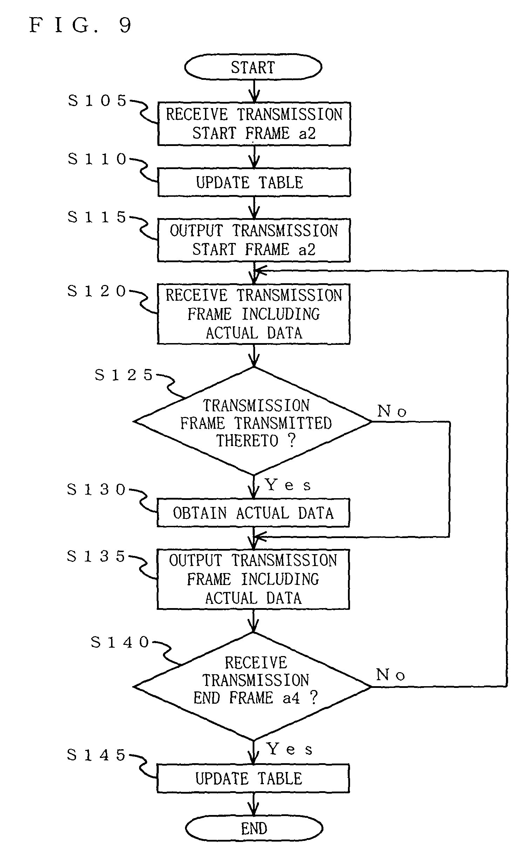

Now, an operation performed by the transmitting/receiving device 300 of the first node 5 and other nodes when the first node 5 transmits a transmission frame to the third node 15 will be described below with reference to the drawings. FIG. 8 is a flowchart showing the operation performed by the transmitting/receiving device 300 of the first node 5. FIG. 9 is a flowchart showing the operation performed by the transmitting/receiving device 300 of other nodes.

First, the operation performed by the transmitting/receiving device 300 of the first node 5 will be described. The band setting processing section 315 generates the band setting field 205 in which a transmission start indicator is 1, a transmission end indicator is 0, and values of the stream field 1102 of the transmission frame received from the sixth node are directly used in other portions of the stream field 1102, and outputs it to the transmission frame processing section 310. Next, the transmission frame processing section 310 uses the output band setting field 205, generates the transmission start frame a2 (step S5), and outputs it to the transmitting section 330. In response thereto, the transmitting section 330 outputs the output transmission start frame a2 to the second node 10 (step S10). Then, as shown in FIG. 6, the transmission start frame a2 goes around the data transmission system. Then, the receiving section 305 of the first node 5 receives the transmission start frame a2 (step S15).

The transmission frame processing section 310 separates the band setting field 205 of the transmission start frame a2 received by the receiving section 305, and outputs it to the band setting processing section 315. The band setting processing section 315 updates the band setting table based on the band setting field 205 (step S20). More specifically, the band setting processing section 315 writes a circle in a box, which corresponds to the first node 5 of the transmitting side nodes and the third node 15 of the receiving side nodes in the band setting table stored in the table storing section 320.

Next, the transmitting/receiving device 300 starts transmitting a transmission frame including actual data (step S25) . More specifically, the transmission frame processing section 310 generates a transmission frame a3 (1) by obtaining, from the actual data processing section, first actual data to be transmitted, and obtaining the band setting field 205 from the band setting processing section 315. The transmitting section 330 transmits the transmission frame a3 (1).

Next, the transmitting/receiving device 300 transmits the transmission frame a3 (x) (x is a natural number) including next actual data (step S30). The transmitting/receiving device 300, which has transmitted the transmission frame a3 (x), determines whether or not the transmitted transmission frame a3 (x) is a transmission frame including the last actual data (step S310). In the process at step S310, determination is made based on whether or not the data length portion 240 of the transmission frame a2 coincides with a length of the transmitted actual data. If it is the last actual data data, the process proceeds to step S40. On the other hand, if it is not the last actual data, the process goes back to step S30.

Here, if it is the last actual data, the transmission frame processing section 310 generates the transmission end frame a4 (step S40). More specifically, the transmission frame processing section 310 causes the band setting processing section 315 to generate the band setting field 205, and generates the transmission end frame a4 using the band setting field 205. Next, the transmission processing section 310 causes the transmitting section 330 to transmit the transmission end frame a4 (step S45). Then, as shown in FIG. 7, the transmission end frame a4 goes around the data transmission system. Then, the receiving section 305 of the first node 5 receives the transmission end frame a4 (step S50).

The transmission frame processing section 310 separates the band setting field 205 of the transmission end frame a4, which has been received by the receiving section 305, and outputs it to the band setting processing section 315. The band setting processing section 315 updates the band setting table based on the band setting field 205 (step S55). More specifically, the band setting processing section 315 deletes a circle written in the box, which corresponds to the first node 5 of the transmitting side nodes and the third node 15 of the receiving side nodes in the band setting table stored in the table storing section 320. This is the end of the description of the operation performed by the transmitting/receiving device 300 of the first node 5.

Next, the operation performed by the transmitting/receiving device 300 of nodes other than the first node 5 will be described with reference to FIG. 9. The receiving section 305 of the transmitting/receiving device 300 receives the transmission start frame a2 transmitted from the first node 5 (step S105), and outputs the transmission start frame a2 to the transmission frame processing section 310. The transmission frame processing section 310 reads the band setting field 205 from the transmission start frame a2, and outputs it to the band setting processing section 315.

The band setting processing section 315, which has obtained the band setting field 205, updates the band setting table based on the band setting field 205 (step S110). More specifically, the band setting processing section 315 checks whether the transmission start indicator of the band setting field 205 is 1, the transmission address is 1, and the reception address is 3. Then, the band setting processing section 315 obtains the band setting table from the table storing section 320, and writes a circle in a box, which corresponds to the first node 5 of the transmitting side nodes and the third node 15 of the receiving side nodes in the band setting table. As a result, the node recognizes that transmission of a transmission frame from the first node 5 to the third node 15 is started. Then, the transmission frame processing section 310 causes the transmitting section 330 to transmit the transmission start frame a2 (step S115).

Next, the receiving section 305 receives the transmission frame a3 (x) transmitted from the first node 5 (step S120), and outputs it to the transmission frame processing section 310.

Here, the transmission frame processing section 310, which has received the transmission start frame a2, recognizes whether or not the transmission frame a3 (x) is a transmission frame, which includes actual data, transmitted thereto. Thus, the transmission frame 310 determines whether or not the transmission frame a3 (x) is a transmission frame transmitted thereto (step S125). If it is a transmission frame transmitted thereto, the process proceeds to step S130. On the other hand, if it is not a transmission frame transmitted thereto, the process proceeds to step S135.

If it is a transmission frame transmitted thereto, the transmission frame processing section 310 reads the actual data portion 210 from the transmission frame a3 (x), and outputs it to the actual data processing section 325. As a result, the actual data processing section 325 obtains the actual data portion 210. Then, the actual data processing section 325 outputs the actual data to its terminal.

Next, the transmission frame processing section 310 determines whether or not the transmission end frame a4 is obtained (step S140). If the transmission frame processing section 310 obtains the transmission end frame a4, the process proceeds to step S145. On the other hand, if the transmission frame processing section 310 does not obtain the transmission end frame a4, the process goes back to step S120.

If the transmission end frame a4 is obtained, the transmission frame processing section 310 causes the band setting processing section 315 to update the band setting table (step S145). More specifically, the band setting processing section 315 deletes a circle written in a box, which corresponds to the first node 5 of the transmitting side nodes and the third node 15 of the receiving side nodes in the band setting table. As a result, each node recognizes that communication between the first node 5 and the third node 15 is ended. This is the end of the description of the operation performed by the transmitting/receiving device 300 of the node other than the first node 5.
(a case in which the fourth node 20 and the fifth node 25 start communication while communication is performed between the first node 5 and the third node 15)

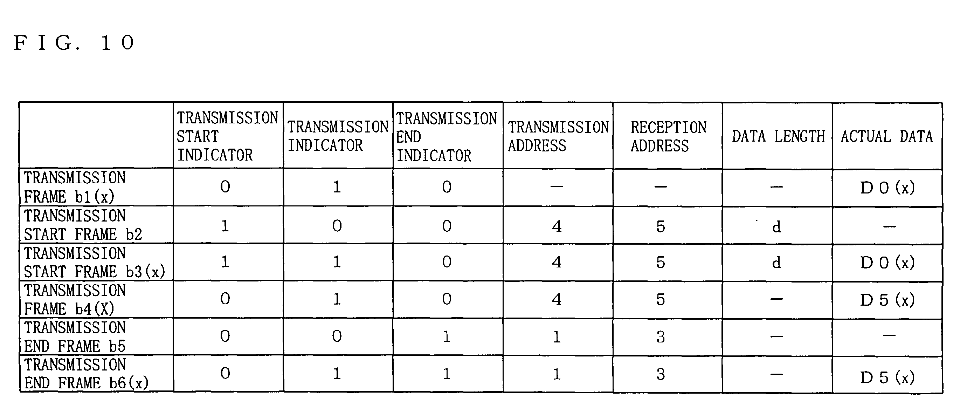

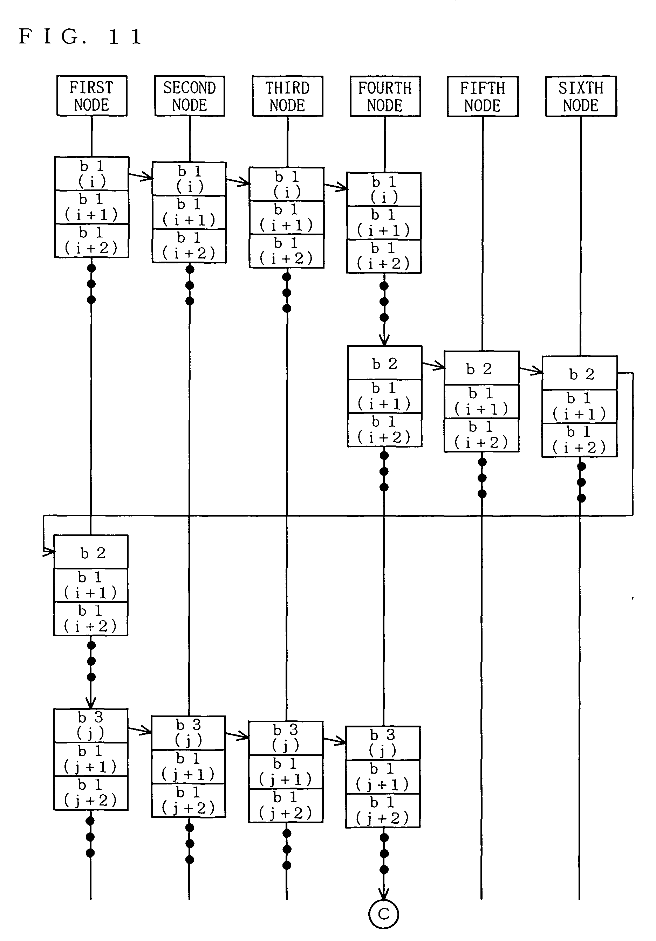

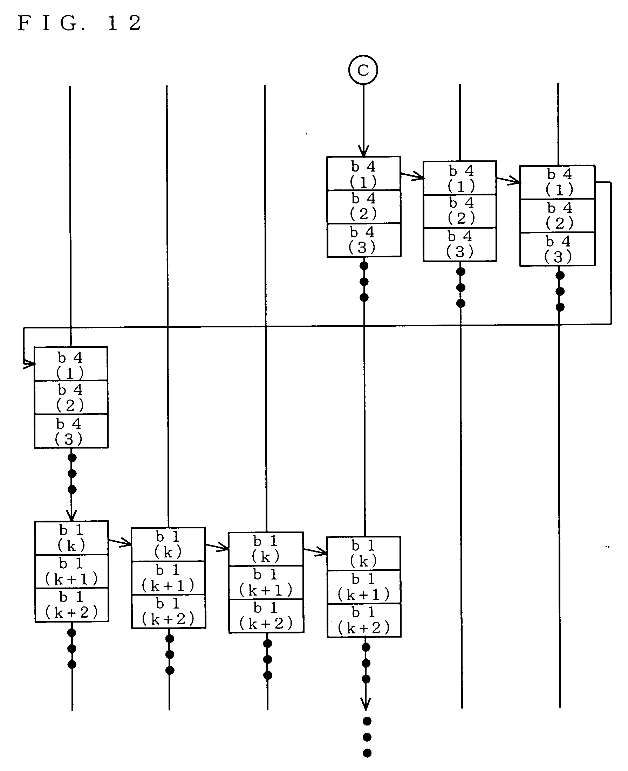

Next, a process performed in the data transmission system according to the present embodiment in the case where transmission of a transmission frame including actual data is performed from the fourth node 20 through the sixth node 30 while the first node 5 transmits a transmission frame including actual data to the third node 15 will be described with reference to the drawings. Note that, in this case, a case in which the fourth node 20 starts transmission of a transmission frame including actual data to the fifth node 25 will be described as an example. FIG. 10 is an illustration showing a field value of the stream field 1102 of a transmission frame. FIGS. 11 and 12 are illustrations showing a flow of a transmission frame in the case where the fourth node 20 starts transmission of a transmission frame to the fifth node 25 while the first node 5 transmits a transmission frame including actual data to the third node 15.

First, from the first node 5, a transmission frame b1 (x) (in the drawing, it is assumed that x=i, i+1, i+2 ···) including actual data to be transmitted to the third node 15 is output. The transmission frame b1 (x) arrives at the third node 15 via the second node 10.

The third node 15 obtains actual data by reading the actual data portion 210 from the transmission frame b1 (x), and outputs the transmission frame b1 (x) to the fourth node 20. In response thereto, the forth node 20 obtains the transmission frame b1 (x) .

Here, the fourth node 20 rewrites one of the obtained transmission frames b1 (x) into a transmission start frame b2, and outputs it to the first node 5. Note that, in this case, a transmission frame b1 (i) is rewritten into the transmission start frame b2. Here, the transmission start frame b2 is a frame for notifying each node that the fourth node 20 is going to start transmission of a transmission frame to the fifth node 25. Thus, a transmission start indicator of the transmission start frame b2 is 1, a transmission address is 4, and a reception address is 5.

Then, the transmission start frame b2 and transmission frames following the transmission frame b1 (i+1) arrive at the first node 5 via the fifth node 25 and the sixth node 30. In the meanwhile, each node records, in the band setting table, that the fourth node 20 is going to transmit a transmission frame including actual data to the fifth node 25. As a result, the first node 5, the fifth node 25, and the sixth node 30 recognize that the fourth node 20 transmits the transmission data including actual data to the fifth node 25.

Next, the first node 5 rewrites the obtained transmission start frame b2 into a transmission start frame b3 (j) including next actual data to be transmitted, and rewrites the transmission frames following the transmission frame b1 (i+1) into transmission frames following the transmission frame b (j+1).

Here, the transmission start frame b3 (j) including actual data will be described. The transmission start frame is basically a frame for making a notification that transmission of a transmission frame is started. Thus, the transmission start frame does not include actual data. However, in a case as shown in FIG. 11, the second node 10 and the third node 15 do not recognize that the fourth node 20 is going to transmit the transmission frame including actual data to the fifth node 25 because the transmission start frame b2 does not go around the data transmission system.

On the other hand, the first node 5 has to transmit the transmission frame including actual data to the third node 15. Thus, the first node 5 generates the transmission start frame b3 (j) including actual data by setting a transmission start indicator of the transmission start frame b2 to 1, and adding actual data to be transmitted to the third node 15. As a result, actual data is transmitted from the first node 5 to the third node 15, and it is possible to notify the second node 10 and the third node 15 that transmission is started.

Next, the first node 5 outputs the transmission start frame b3 (j) including actual data and the transmission frame b1 (x) (x=an integer following j+1) to the second node 10. The second node 10 refers to the band setting field 205 of the transmission start frame b3 (j), and records, in the band setting table, that the fourth node 20 is going to transmit the transmission frame including actual data to the fifth node 25. As a result, the second node 10 recognizes that the fourth node 20 is going to transmit the transmission frame including actual data to the fifth node 25. Then, the second node 10 outputs the transmission start frame b3 (j) output from the first node 5 and the transmission frame b1 (x) (x=an integer following j+1) to the third node 15.

The third node 15 refers to the band setting table of the transmission start frame b3 (j), and records, in its band setting table, that the fourth node 20 is going to transmit the transmission frame including actual data to the fifth node 25. Furthermore, the third node 15 reads the actual data portion 210 included in the transmission start frame b3 (j) and the transmission frame b1 (x) (x=an integer following j+1). As a result, the third node 15 recognizes that the fourth node 20 is going to transmit the transmission frame including actual data to the fifth node 25, and is able to obtain the actual data transmitted from the first node 5.

Next, the third node 15 outputs the transmission start frame b3 (j) and the transmission frame b1 (x) (x=an integer following j+1) to the fourth node 20. The fourth node 20 records, in its band setting table, that the fourth node 20 is going to transmit the transmission frame including actual data to the fifth node 25. As a result, the fourth node 20 starts transmission of a transmission frame to the fifth node 25. More specifically, the fourth node 20 sequentially generates a transmission frame b4 (x) (x=an integer following 1) including actual data to be transmitted to the fifth node 25, and outputs it to the fifth node 25. In response thereto, the fifth node 25 obtains the transmission frame b4 (x) (x=an integer following 1) , and reads the actual data included in the transmission frame b4 (x) (x=an integer following 1). As a result, the fifth node 25 can obtain the actual data output from the fourth node 20. Then, the fifth node 25 outputs the transmission frame b4 (x) (x=an integer following 1), which is output from the fourth node 20, to the sixth node 30.

After passing through the sixth node 30, the transmission frame b4 (x) (x=an integer following 1) output from the fifth node 25 is input to the first node 5. The first node 5 rewrites the input transmission frame b4 (x) (x=an integer following 1) into a transmission frame b1 (k) including actual data to be transmitted to the third frame 15 and transmission frames including actual data, which follow the transmission frame b1 (k), and outputs them to the second node 10. Then, the transmission frame b1 (k), etc., passes through the second node 10, and arrives at the third node 15. Then, the third node 15 reads actual data from the transmitted transmission frame b1 (k), etc. , and outputs the transmission frame b1 (k), etc., to the fourth node 20. Next, the fourth node 20 rewrites the obtained transmission frame b1 (k), etc., into a transmission frame including actual data to be transmitted to the fifth node 25. Hereinafter, the first node 5 and the fourth node 20 rewrite the obtained transmission data into transmission data including actual data to be output therefrom, and transmit it. An operation performed during this period in the data transmission system will be briefly described.

First, the first node 5 rewrites the obtained transmission data into transmission data including actual data to be transmitted to the third node 15, and transmits it to the third node 15 (first step). The transmission data output by the first node 5 passes through the second node 10, and actual data is read therefrom in the third node 15 (second step). Next, the third node 15 outputs the obtained transmission data to the fourth node 20 (fourth step) . The fourth node 20 rewrites the obtained transmission data into transmission data including actual data to be transmitted to the fifth node 25, and outputs it to the fifth node 25 (sixth step). The fifth node 25 reads the actual data from the obtained transmission data (seventh step). Next, the fifth node 25 outputs the obtained transmission data to the sixth node 30 (eighth step) . After passing through the sixth node 30, the transmission data output from the fifth node 25 is input to the first node 5 (ninth step). As such, by repeating the first to ninth steps, the fourth node 20 is allowed to transmit transmission data to the fifth node 25 while the first node 5 transmits transmission data to the third node 15.

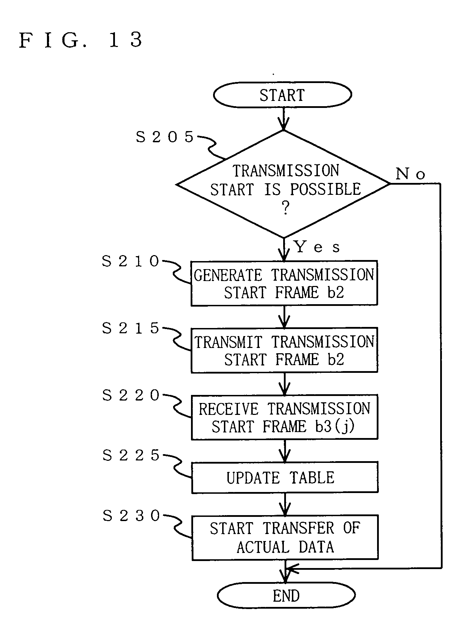

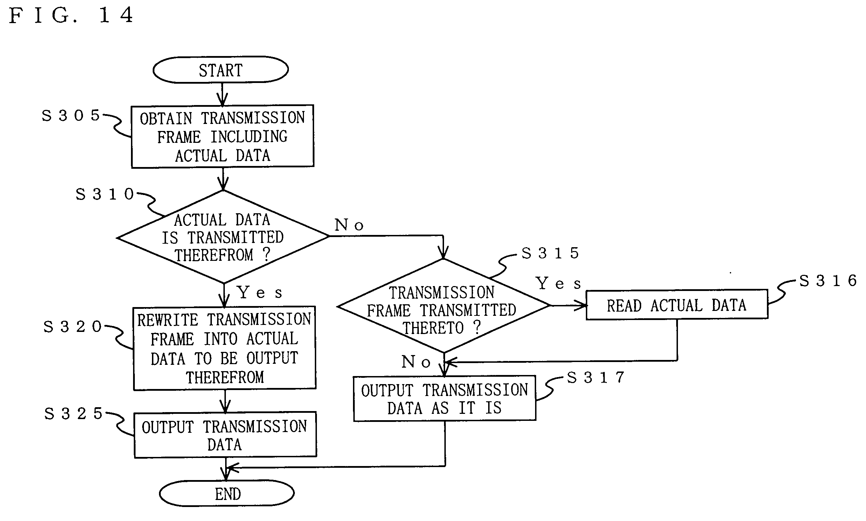

Next, with reference to the drawings, an operation performed by the fourth node 20 and other nodes in the case where transmission of a transmission frame is performed from the fourth node 20 through the sixth node 30 while the first node 5 transmits a transmission frame to the third node 15 will be described. First, FIG. 13 is a flowchart showing an operation performed by the transmitting/receiving device 300 of the fourth node 20 in the above case. FIG. 14 is a flowchart showing an operation performed by the transmitting/receiving device 300 of each node while communication is performed between the fourth node 20 and the fifth node 25.

First, with reference to FIG. 13, the operation performed by the transmitting/receiving device 300 of the fourth node 20 will be described. The band setting processing section 315 determines whether or not a transmission frame can be transmitted to the fifth node 25 (step S205). In the above process, the band setting processing section 315 refers to its band setting table, and determines whether or not a transmission path used by the first node 5 and the third node 15 conflicts with a transmission path used by the fourth node 20 and the fifth node 25. Here, if transmission of a transmission frame is possible, the process proceeds to step S210. On the other hand, if transmission of a transmission frame is impossible, the process is ended without performing transmission of a transmission frame.

If transmission of a transmission frame is possible, the transmission frame processing section 310 generates the transmission start frame b2 (step S210). Specifically, in a process shown in step S210, the band setting processing section 315 first generates the band setting field 205 in a box of the transmission start frame b2 shown in FIG. 10, and outputs it to the transmission frame processing section 310. The transmission frame processing section 310 generates the transmission start frame b2 using the band setting field 205.

Next, the transmission frame processing section 310 causes the transmitting section 330 to transmit the generated transmission start frame b2 (step S215). The transmission start frame b2 transmitted from the transmitting section 330 is transmitted through the data transmission system, and rewritten into the transmission frame b3 (j) in the first node 5. Then, the transmission start frame b3 (j) is received by the receiving section 305 (step S220).

Next, the transmission frame processing section 310 outputs, to the actual data processing section 325, the actual data portion 210 of the transmission start frame b3 (j) received by the receiving section 305, and outputs the band setting field 205 to the band setting processing section 315. The band setting processing section 315 changes the band setting table based on the obtained band setting field 205 (step S225). More specifically, the band setting processing section 315 writes a circle in a box, which corresponds to the fourth node 20 of the transmitting side nodes and the fifth node 25 of the receiving side nodes in the band setting table. As a result, the fourth node 20 recognizes that it transmits a transmission frame including actual data to the fifth node 25. Then, the fourth node 20 starts transmission of a transmission frame including actual data (step S230). This is the end of the description of the operation performed by the transmitting/receiving device 300 of the fourth node 20.

Next, an operation performed by the transmitting/receiving device 300 of each node after transmission of transmission data is started from the fourth node 20 to the fifth node 25 will be described with reference to FIG. 14. The process is an operation performed by each node while the above first to ninth steps are performed.

First, the receiving section 305 receives a transmission frame including actual data (step S305), and outputs it to the transmission frame processing section 310. The transmission frame processing section 310, which has received the transmission frame, determines whether or not a transmission frame including actual data is transmitted therefrom (step S310). If a transmission frame is not transmitted therefrom, the process proceeds to step S315. If a transmission frame is transmitted therefrom, the process proceeds to step S320.

If a transmission frame is not transmitted therefrom, the transmission frame processing section 310 determines whether or not the actual data in the transmission frame is a transmission frametransmittedthereto (step S315). Note that the transmission frame processing section 310 recognizes to which node the transmission frame including actual data should be transmitted at the time of reception of the transmission start frame b2. Thus, the transmission frame processing section 310 makes the determination based on the above recognition. If the transmission frame is transmitted thereto, the process proceeds to step S316. On the other hand, if it is not transmitted thereto, the process proceeds to step S317.

If the transmission frame is transmitted thereto, the transmission frame processing section 310 reads the actual data portion 210, and outputs it to the actual data processing section 325 (step S316). Then, the actual data processing section 325 outputs the obtained actual data portion 210 to the terminal. Then, the process proceeds to step S317.

At the above step S317, the transmission frame processing section 310 causes the transmitting section 330 to directly output the obtained transmission frame to a next frame (step S317), which is the end of the process.

On the other hand, if the determination is made at step S310 that a transmission frame including actual data is transmitted therefrom, the transmission frame processing section 310 rewrites the contents of the obtained transmission frame into a transmission frame including actual data to be transmitted therefrom (step S320). Next, the transmission frame processing section 310 causes the transmitting section 330 to transmit the rewritten transmission frame to a next node (step S325), which is the end of the process. This is the end of the description of the operation performed by the transmitting/receiving device 300 of each node after the fourth node 20 starts transmission of a transmission frame to the fifth node 25.
(a case in which one of two communications, which are performed simultaneously, is ended)

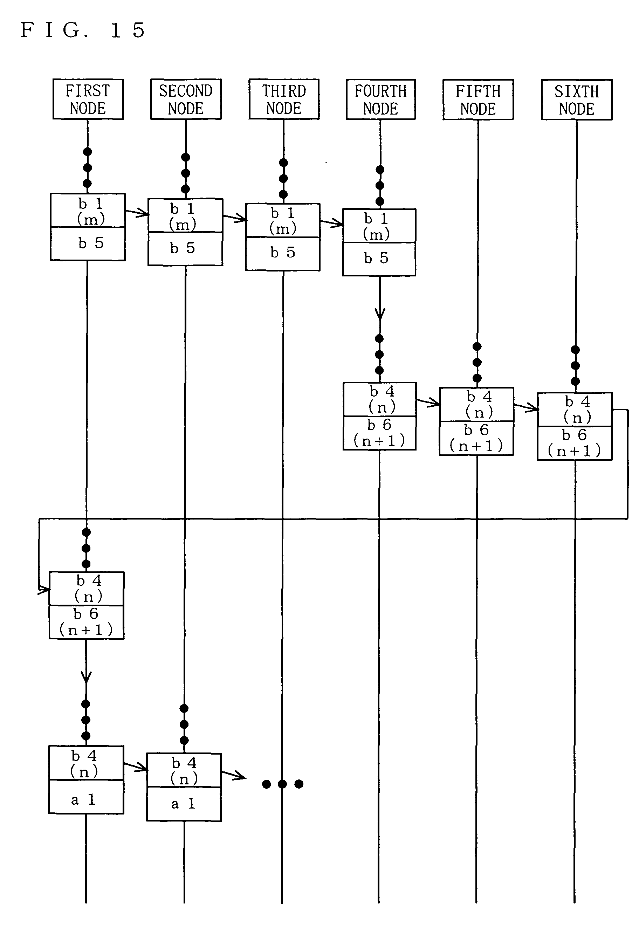

Next, a flow of a transmission frame in a case where the first node 5 ends transmission of a transmission frame when the first node 5 performs communication with the third node 15, and the fourth node 20 performs communication with the fifth node 25 will be described with reference to the drawing. FIG. 15 is an illustration showing a flow of a transmission frame in the above case.

After transmission of a transmission frame b1 (m) including the last actual data, the first node 5 generates a transmission end frame b5, and outputs it to the second node 10. The transmission end node b5 is a transmission frame for notifying each node that transmission of a transmission frame from the first node 5 to the third node 15 is ended. Thus, a transmission end indicator of the transmission end frame is set to 1, a transmission address thereof is set to 1, and a reception address thereof is set to 3.

The transmission frame b1 (m) and the transmission end frame b5 are input to the third node 15 via the second node 10. In the meanwhile, the second node 10 records, in its band setting table, that the data transmission from the first node 5 to the third node 15 is ended. Thus, the second node 10 recognizes that the data transmission from the first node 5 to the third node 15 is ended.

The third node 15, which has obtained the transmission frame b1 (m) and the transmission end frame b5, reads and obtains actual data from the transmission frame b1 (m), and records, in its band setting table, that the data transmission from the first node 5 to the third node 15 is ended. Thus, the third node 15 recognizes that the data transmission from the first node 5 to the third node 15 is ended. Then, the third node 15 outputs the transmission frame b1 (m) and the transmission end frame b5 to the fourth node 20.

The fourth node 20 rewrites the obtained transmission frame b1 (m) and the transmission end frame b5 into a transmission frame b4 (n) and a transmission end frame b6 (n+1), respectively. Here, the transmission frame b4 (n) is a transmission frame including actual data to be transmitted from the fourth node 20 to the fifth node 25. Also, the transmission end frame b6 (n+1), which notifies each node that the data transmission from the first node 5 to the third node 15 is ended, includes actual data to be transmitted from the fourth node 20 to the fifth node 25.

Next, the fourth node 20 outputs the rewritten transmission frame b4 (n) and the transmission end frame b6 (n+1) to the fifth node 25. The fifth node 25 reads and obtains actual data from the transmission frame b4 (n) and the transmission end frame b6 (n+1), and recognizes that the communication between the first node 5 and the third node 15 is ended by referring the band setting field of the transmission end frame b6 (n+1). More specifically, the fifth node 25 records, in its band setting table, that the communication between the first node 5 and the third node 15 is ended.

Next, the fifth node 25 outputs the transmission frame b4 (n) and the transmission end frame b6 (N+1) to the sixth node 30. The transmission frame b4 (n) and the transmission end frame b6 (n+1), which are output from the fifth node 25, arrive at the first node 5 after passing through the sixth node 30. In the meanwhile, the sixth node 30 records, in its band setting table, that the communication between the first node 5 and the third node 15 is ended.

Next, the first node 5, which has received the transmission frame b4 (n) and the transmission end frame b6 (n+1), rewrites the transmission frame b4 (n) into a1 shown in FIG. 5. As a result, the communication between the first node 5 and the third node 15 is completely ended. Then, the transmission frame b4 (n) and a1 are input to the fourth node 20 via the second node 10 and the third node 15. Subsequently, a state is shifted to a normal communication between the fourth node 20 and the fifth node 25.

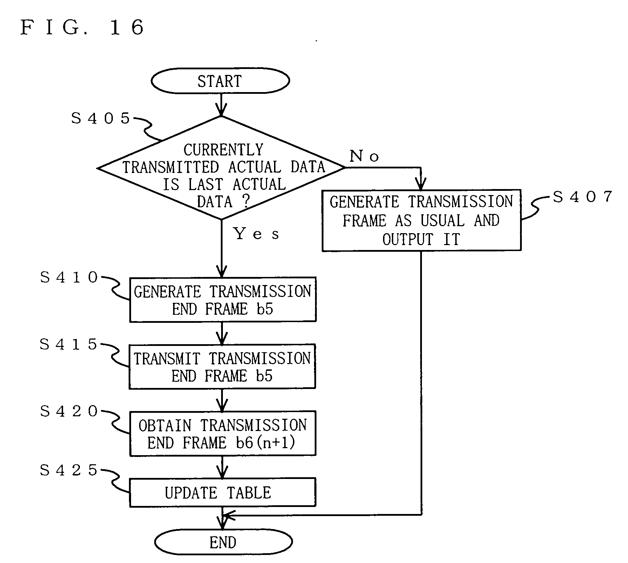

Now, an operation performed by the transmitting/receiving device 300 of the first node 5 in a case where the first node 5 ends transmission of a transmission frame while the first node 5 performs communication with the third node 15 and the fourth node 20 performs communication with the fifth node 25 will be described with reference to the drawing. FIG. 16 is a flowchart showing the operation performed by the transmitting/receiving device 300 of the first node 5 in the above case.

First, the transmission frame processing section 310 determines whether or not actual data to be transmitted therefrom is the last actual data (step S405). If actual data to be transmitted therefrom is not the last actual data, the process proceeds to step S407. If actual data to be transmitted therefrom is the last actual data, the process proceeds to step S410.

If actual data to be transmitted therefrom is not the last actual data, the transmission frame processing section 310 writes the actual data into the transmission frame as usual, and outputs it to a next node (step S407).

On the other hand, if actual data to be transmitted therefrom is the last actual data, the transmission frame processing section 310 generates the transmission end frame b5 (step S410). The transmission end frame b5 is a transmission frame for notifying each node that the communication between the first node 5 and the third node 15 is ended. Thus, a transmission end indicator is set to 1, a transmission address is set to 1, and a reception address is set to 3.

Next, the transmission frame processing section 310 outputs the generated transmission end frame b5 to a next node (step S415). Then, the transmission end frame is input to the fourth node 20 via the second node 10 and the third node 15. The fourth node 20 rewrites the transmission end frame b5 into the transmission end frame b6 (n+1), and outputs it to a next node. Then, the transmission end frame b6 (n+1) is input to the first node 5 via the fifth node 25 and the sixth node 30.

The receiving section 305 of the first node 5 receives the transmission end frame b6 (n+1) transmitted by the fourth node 20 (step S420), and outputs it to the transmission frame processing section 310. The transmission frame processing section 310 updates its band setting table based on the band setting field of the transmission end frame b6 (n+1) (step S425). More specifically, the transmission frame processing section 310 deletes a circle from the box, which corresponds to the first node 5 of the transmitting side nodes and the third node 15 of the receiving side nodes in its band setting table. Thus, the first node 5 recognizes that the communication therefrom to the third node 15 is ended. This is the end of the description of the operation performed by the transmitting/receiving device 300 of the first node 5 in the case where the first node 5 ends transmission of a transmission frame while the first node 5 performs communication with the third node 15 and the fourth node 20 performs communication with the fifth node 25.
(a case in which two nodes are going to start transmission of a transmission frame at the same time)

Here, a case in which two nodes are going to start transmission of a transmission frame at the same time will be described. In the data transmission system according to the present embodiment, each node refers to its band setting table for determining whether or not it is possible to perform communication with other nodes when starting communication with other nodes.

However, when no transmission of a transmission frame is performed in the data transmission system, two nodes may determine that it is possible to perform communication and concurrently start transmission of a transmission frame. Here, if the two nodes use the same transmission path, transmission of a transmission frame by the two nodes is not realized.

Thus, hereinafter, a data transmission system in which either transmission frame is given higher priority in transmission in the above case will be described. Note that, in the present embodiment, it is assumed that a transmission frame output from a node with a smaller node number is given higher priority in transmission in the following descriptions.

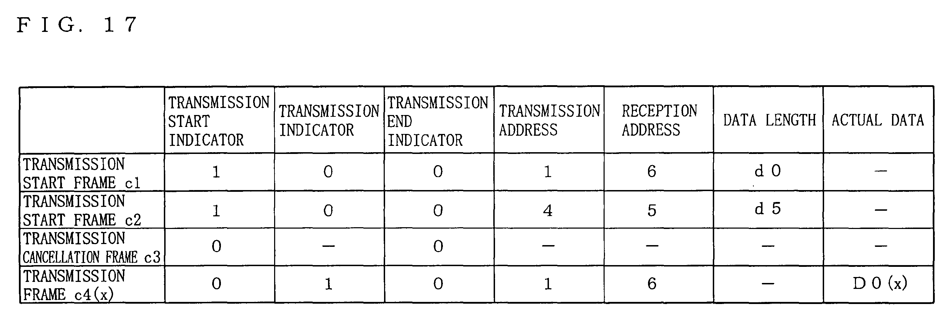

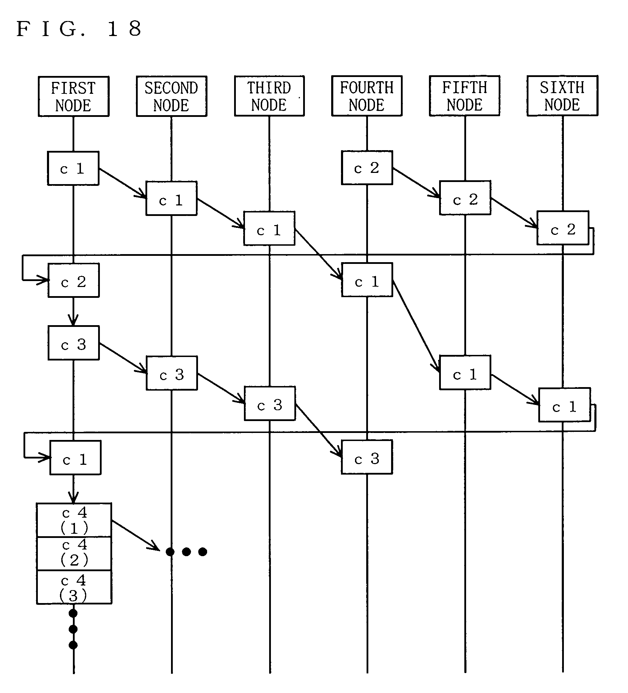

Here, as an example of the above case, a case in which the first node 5 transmits a transmission frame including actual data to the sixth node 30, and the fourth node 20 transmits a transmission frame including actual data to the fifth node 25 will be described with reference to the drawings. FIG. 17 is an illustration showing a field value of the stream field 1102 of a transmission frame. FIG. 18 is an illustration showing a flow of a transmission frame in the above case.

First, the first node 5 and the fourth node 20 concurrently generate a transmission start frame c1 and a transmission start frame c2, respectively, and output it to a next node. Here, the transmission start frame c1 is a transmission frame for notifying each node that the first node 5 is going to transmit a transmission frame including actual data to the sixth node 30. Thus, a transmission start indicator is set to 1, a transmission address is set to 1, and a reception address is set to 6. On the other hand, the transmission start frame c2 is a transmission frame for notifying each node that the fourth node 20 is going to transmit a transmission frame including actual data to the fifth node 25. Thus, a transmission start indicator is set to 1, a transmission address is set to 4, and a reception address is set to 5.

First, the transmission start frame c1 output from the first node 5 arrives at the fourth node 20 via the second node 10 and the third node 15. In the meanwhile, the second node 10 and the third node 15 record, in each band setting table, that the first node 5 and sixth node 30 are going to start communication.

Here, the transmission start frame c1, which is output from the first node 5, is received by the fourth node 20 before the transmission start frame c2 output therefrom goes around the transmission system and returns thereto.

On the other hand, the transmission start frame c2 output from the fourth node 20 arrives at the first node 5 via the fifth node 25 and the sixth node 30. In the meanwhile, the fifth node 25 and the sixth node 30 record, in each band setting table, that the fourth node 20 and the fifth node 25 are going to start communication.

Here, the transmission start frame c2, which is output from the fourth node 20, is received by the first node 5 before the transmission start frame c1 output therefrom goes around the transmission system and returns thereto.

As such, both the first node 5 and the fourth node 20 receive, before receiving the transmission start frame output therefrom, the transmission start frame output from the other node. Here, transmission of a transmission frame from the first node 5 to the sixth node 30 is given higher priority because, in the present embodiment, it is assumed that a node with a smaller node number is given higher priority in transmission.

Thus, the first node 5 rewrites the transmission start frame c2 transmitted from the fourth node 20 into a transmission cancellation frame c3, and outputs it. The transmission cancellation frame c3 is a transmission frame for canceling transmission of a transmission frame between the fourth node 20 and the fifth node 25. More specifically, the transmission cancellation frame c3 is a transmission frame whose transmission start indicator and transmission end indicator are 0. The transmission cancellation frame c3 is transmitted from the first node 5, and arrives at the fourth node 20. Note that, in the meanwhile, the second node 10 and the third node 15 output the transmission cancellation frame c3 to a next frame without changing its band setting table.

On the other hand, the fourth node 20 updates its band setting table based on the transmission start frame c1 transmitted from the first node 5, and directly outputs the transmission start frame c1 to the fifth node 25. After passing through the fifth node 25 and the sixth node 30, the transmission start frame c1 is input to the first node 5. Note that, in the meanwhile, the fifth node 25 and the sixth node 30 update the band setting table. The first node 5, which has received the transmission start frame c1, decides to start transmission of a transmission frame to the sixth node 30. Then, the first node 5 outputs a transmission frame c4 (x) (x is an integer equal to or greater than 1) including actual data. By the above operation, a transmission frame from the first node 5 is given higher priority in transmission.

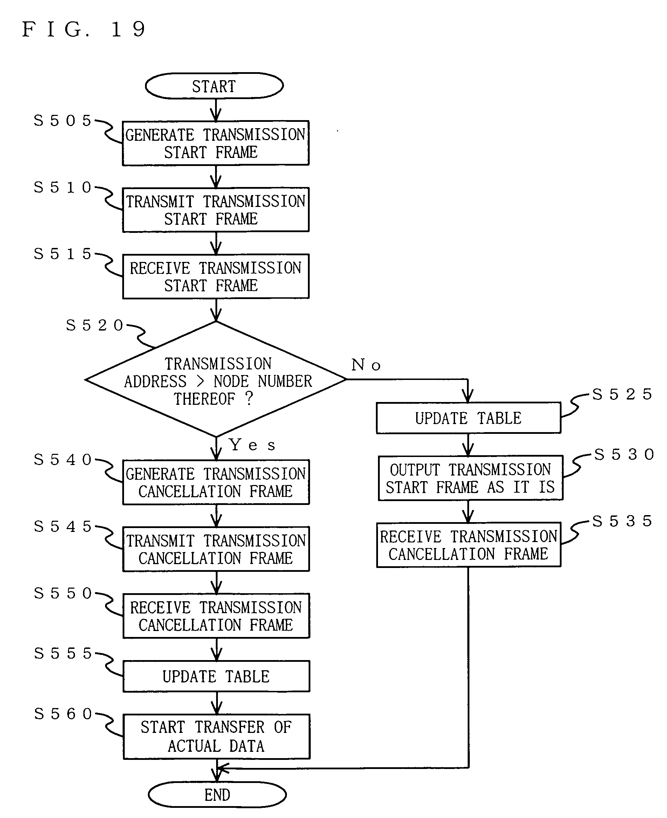

Now, an operation performed by the first node 5 or the fourth node 20 while the above operation is performed will be described with reference to the drawing. FIG. 19 is a flowchart showing the operation performed by the first node 5 or the fourth node 20 in this case.

First, the band setting processing section 315 generates the band setting field 205, and outputs it to the transmission frame processing section 310. In this case, the band setting processing section 315, if it belongs to the first node 5, sets a transmission start indicator to 1, a transmission address to 1, and a reception address to 6. On the other hand, the band setting processing section 315, if it belongs to the fourth node 20, sets a transmission start indicator to 1, a transmission address to 4, and a reception address to 5.

The transmission frame processing section 310 generates the transmission start frame c1 or the transmission start frame c2 using the obtained band setting field 205 (step S505). Next, the transmission frame processing section 310 causes the transmitting section 330 to transmit the generated transmission start frame c1 or c2 to a next node (step S510).

Next, the receiving section 305 receives the transmission start frame transmitted from the other node (step S515). More specifically, the receiving section 305, if it belongs to the first node 5, receives the transmission start frame c2 output from the fourth node 20. On the other hand, the receiving section 305, if it belongs to the fourth node 20, receives the transmission start frame c1 output from the first node 5.

Next, the transmission frame processing section 310 outputs only the band setting field 205 of the obtained transmission start frame to the band setting processing section 315. In response thereto, the band setting processing section 315 obtains the band setting field 205. Then, the band setting processing section 315 refers to a transmission address, and determines whether or not a number of the transmission address is greater than its node number (step S520). If the number of the transmission address is not greater than its node number, the process proceeds to step S525. If the number of the transmission address is greater than its node number, the process proceeds to step S540.

If the number of the transmission address is not greater than its node number, the band setting processing section 315 updates the band setting table based on the band setting field 205 (step S525). The process is a process performed by the band setting processing section 315 of the fourth node 20. More specifically, the band setting processing section 315 of the fourth node 20 registers, in the band setting table, that the first node 5 has started transmission of a transmission frame to the sixth node 30.

Next, the transmission frame processing section 310 causes the transmitting section 330 to directly output the obtained transmission start frame to a next node (step S530). Next, the receiving section 305 receives a transmission cancellation frame, which is rewritten and transmitted by the other node (step S535). Thus, the node stops starting transmission of a transmission frame.

On the other hand, at step S520, if the determination is made that the number of the transmission address is greater than its node number, the transmission frame processing section 310 generates a transmission cancellation frame (step S540). The process is an operation performed by the transmission frame processing section 310 of the first node 5. More specifically, the transmission frame processing section 310 of the first node 5 generates the transmission cancellation frame c3 shown in FIG. 17 based on the band setting field 205 generated by the band setting processing section 315. Then, the transmission frame processing section 310 causes the transmitting section 330 to output the generated transmission cancellation frame c3 to a next node (step S545).

Next, the receiving section 305 receives the transmission start frame transmitted therefrom (step S550), and outputs it to the transmission frame processing section 310. The transmission frame processing section 310 separates the band setting field 205 of the obtained transmission start frame, and outputs it to the band setting processing section 315. The band setting processing section 315 updates the band setting table based on the band setting field 205 (step S555). More specifically, the band setting processing section 315 registers, in the band setting table, that the first node 5 starts transmission of a transmission frame to the sixth node 30. Then, the transmission frame processing section 310 starts transmission of a transmission frame including actual data (step S560). This is the end of the description of the operation performed by the first node 5 or the fourth node 20.

As described above, according to the data transmission system of the present embodiment, a band setting field is provided in a part of a stream field of a transmission frame, and a communication status of the data transmission system is written into the band setting field, whereby each node can recognize a transmission status in the data transmission system. As a result, when each node is going to start transmission to another node, it is able to check whether or not its transmission path conflicts with another's transmission. Thus, a plurality of transmissions can be performed only when the same transmission path is not used, whereby it is possible to realize effective utilization of a transmission path band.

Note that the values, the data formats, and the node numbers, etc. , used in the present embodiment are shown as an example, and are not limited thereto.

Note that, in the present embodiment, it is assumed that the stream field is composed of the band setting field 101 and the actual data portion 116, but the structure of the stream field is not limited thereto. Part of the stream field may be assigned to a specific transmission such as transmission of audio data from a CD deck to an amplifier, for example, and the remaining field may be used as described in the present embodiment.

Note that, in the present embodiment, it is assumed that each node refers to the band setting field 205 of the received transmission frame, but all nodes do not necessarily have to refer to the band setting field 205. For example, only a node performing transmission of a transmission frame may refer to the band setting field 205.

Note that, in the present embodiment, it is assumed that a receiving side is notified of a data length when transmission is started, but notification of the data length is not limited thereto. For example, a data length of each transmission frame may be written into a data length portion, and a node on a receiving side may retrieve necessary data by referring to the data length portion in each case. Also, the data length portion may be omitted, and a frame following a transmission start frame to a frame immediately preceding a transmission end frame may be obtained as actual data.

Note that, in the present embodiment, a receiving side node receives a transmission frame, and directly sends the transmission frame, without rewriting it, to a next frame after obtaining actual data. Here, a receiving side node may delete the actual data portion by, for example, overwriting it with invalid data because it is unnecessary for a next node.

Note that, in the present embodiment, as competitive control used in the case where two nodes concurrently try to start transmission, it is assumed that a node with a smaller number is given higher priority, but the competitive control is not limited thereto. For example, as a method of the competitive control, another method, such as a method in which priorities among the nodes are previously set or a method in which priorities among the nodes are set based on a time when the last transmission is performed, may be used.

Note that the present embodiment does not impose limitations on the number of successively available transmission frames, but an upper limit may be set on the number of successively available transmission frames in order to prevent a specific node from exclusively holding a transmission frame for a long time.

Note that the present embodiment does not refer to a topology of the nodes, but it is possible to further enhance effective utilization of a band by arranging two nodes frequently performing transmission therebetween so as to be physically located as close to each other as possible.

Note that, in the present embodiment, a data transmitting node and a data receiving node are described separately, but one node may perform data transmission and data reception.

Note that, in the present embodiment, it is assumed that a transmitting side node and a receiving side node perform one-to-one data transmission, but one transmitting side node may perform data transmission to a plurality of receiving side nodes at a time. In this case, a plurality of reception address portions 230 are provided in the band setting field 205. In the case where there are a plurality of reception address portions 230, each node recognizes that a currently used transmission path ranges from a transmitting side node to a receiving side node located farthest therefrom.

Here, in the case where one transmitting side node performs data transmission for a plurality of receiving side nodes at a time, the plurality of receiving side nodes may always receive the same data from the transmitting side node. For example, as the above-described case, two loudspeakers may always receive one piece of data transmitted by one amplifier. In such a case, if an address of a loudspeaker located farthest from the amplifier is written into the reception address, the loudspeaker located closest to the amplifier can determine that it is data transmitted thereto and obtain the data. By the above-described setting, it is possible to reduce of the number of reception address portions of a transmission frame.

Note that, in the present embodiment, it is assumed that each node is connected by an optical transmission line, but it is not necessarily connected by the optical transmission line. More specifically, each node may be connected by a conducting wire transmitting an electric signal.

### INDUSTRIAL APPLICABILITY

As described above, a data transmission system, a data transmission apparatus, and a data transmission method according to the present invention effectively utilize a transmission band of a ring network, while a part of a transmission path is used for communication in the ring network, by enabling communication using other part of the transmission path.

## Claims

1. A data transmission system for transmitting data in one direction, in accordance with a predetermined protocol, in a network in which a plurality of data transmission apparatus are connected in a loop, wherein
each data transmission apparatus comprises:
recognizing means for recognizing a part of the network being used by other data transmission apparatus between a transmission source and a transmission destination in data transmission;
determining means for determining whether or not the part of the network recognized by the recognizing means coincides with a part of the network to be used by the data transmission apparatus for new data transmission between a transmission source and a transmission destination;
transmitting means for starting the new data transmission if the determining means determines that the part of the network recognized by the recognizing means does not coincide with the part of the network to be used by the data transmission apparatus for the new data transmission between the transmission source and the transmission destination.

2. The data transmission system according to claim 1, wherein
each data transmission apparatus further comprises notifying means for notifying the other data transmission apparatus that it is going to start data transmission when the data transmission is started, and
the recognizing means recognizes the part of the network being used by the other data transmission apparatus between the transmission source and the transmission destination, based on a notification from the notifying means included in the other data transmission apparatus.

3. The data transmission system according to clam 2, wherein
the data transmission apparatus has an identification number assigned thereto for identification,
each data transmission apparatus further comprises comparing means for comparing its identification number with those of the other data transmission apparatus, based on a notification from the notifying means included in the other data transmission apparatus,
the network includes first and second data transmission apparatus,
when the notifying means of the first data transmission apparatus and the notifying means of the second data transmission apparatus concurrently notify the other data transmission apparatus that data transmission is started, the determining means of the first data transmission apparatus and the second data transmission apparatus determine whether or not a part of the network to be used by the first data transmission apparatus for data transmission between a transmission source and a transmission destination coincides with a part of the network to be used by the second data transmission apparatus for data transmission between a transmission source and a transmission destination,
when the determining means determine that the part of the network to be used by the first data transmission apparatus for data transmission between a transmission source and a transmission destination coincides with the part of the network to be used by the second data transmission apparatus for data transmission between a transmission source and a transmission destination, the comparing means of the first data transmission apparatus and the second data transmission apparatus compare which is smaller, the identification number of the first data transmission apparatus or the identification number of the second data transmission apparatus,
the transmitting means of the first data transmission apparatus or the second data transmission apparatus, which is determined that it has a smaller identification number, starts transmission of the data, and
the transmitting means of the first data transmission apparatus or the second data transmission apparatus, which is determined that it has a larger identification number, cancels transmission of the data.

4. The data transmission system according to claim 1, wherein the predetermined protocol is MOST (Media Oriented System Transport).

5. The data transmission system according to claim 2, wherein the data is embedded in a transmission frame circulating in the network in one direction for transmission.

6. The data transmission system according to claim 5, wherein, when the new data transmission is performed, each transmitting means of the data transmission apparatus transmits data in the transmission frames transmitted from the other data transmission apparatus after rewriting it into data to be transmitted therefrom.

7. The data transmission system according to claim 5, wherein the transmission frame has a field, as a part of a field in which the data is stored, in which information used by the notifying means for notifying that the data transmission is started is stored.

8. A data transmission method for transmitting data in one direction, in accordance with a predetermined protocol, in a network in which a plurality of data transmission apparatus are connected in a loop, comprising:
a recognizing step of recognizing, in the plurality of data transmission apparatus, a part of the network being used between a transmission source and a transmission destination for data transmission;
a determining step of determining, in a data transmission apparatus which is going to start a new data transmission, whether or not the part of the network recognized at the recognizing step coincides with a part of the network to be used between a transmission source and a transmission destination for the new data transmission; and
a transmitting step at which the new data transmission is started when a determination is made at the determining step that the part of the network recognized at the recognizing step does not coincide with the part of the network to be used between a transmission source and a transmission destination for the new data transmission.

9. A data transmission apparatus, which is one of a plurality thereof provided in a ring network, for transmitting data in one direction in accordance with a predetermined protocol, comprising:
recognizing means for recognizing a part of the ring network being used between a transmission source and a transmission destination for data transmission;
determining means for determining whether or not the part of the network recognized by the recognizing means coincides with a part of the network to be used between a transmission source and a transmission destination for new data transmission when transmission of new data is started while other data transmission apparatus perform data transmission; and
transmitting means for transmitting the new data if the determining means determines that the part of the network recognized by the recognizing means does not coincide with the part of the network to be used between a transmission source and a transmission destination for the new data transmission.

## Amended claims

### Amended claims under Art. 19.1 PCT

**1.** (Amended) A data transmission system for transmitting data, in which a transmission frame circulating in a network is embedded, in the network in which a plurality of data transmission apparatus are connected in a loop, in accordance with a predetermined protocol, wherein
the transmission frame has a field in which information for notifying that the data transmission is started is stored, as a part of a field in which the data is stored,
each transmission apparatus comprises:
notifying means for notifying other data transmission apparatus that the data transmission is started based on the information for notifying that the data transmission is started, when the data transmission is started;
recognizing means for recognizing a part of the network used by the other data transmission apparatus between a transmission source and a transmission destination, based on a notification from the notifying means included in the other data transmission apparatus;
determining means for determining whether or not the part of the network recognized by the recognizing means coincides with a part of the network used thereby between a transmission source and a transmission destination in new data transmission,
transmitting means for starting the new data transmission if the determining means determines that the part of the network recognized by the recognizing means does not coincide with the part of the network used thereby between a transmission source and a transmission destination in the new data transmission.

**2.** (Canceled)

**3.** (Amended) The data transmission system according to claim 1, wherein
each data transmission apparatus has priority previously assigned thereto,
each data transmission apparatus further comprises comparing means for comparing its priority with those of the other data transmission apparatus, based on a notification from the notifying means included in the other data transmission apparatus,
the network includes first and second data transmission apparatus,
when the notifying means of the first data transmission apparatus and the notifying means of the second data transmission apparatus concurrently notify other data transmission apparatus that data transmission is started, the determining means of the first data transmission apparatus and the second data transmission apparatus determine whether or not a part of the network to be used by the first data transmission apparatus between a transmission source and a transmission destination in data transmission coincides with a part of the network to be used by the second data transmission apparatus between a transmission source and a transmission destination in data transmission,
if the determining means determine that the part of the network to be used by the first data transmission apparatus between a transmission source and a transmission destination in data transmission coincides with the part of the network to be used by the second data transmission apparatus between a transmission source and a transmission destination in data transmission, the comparing means of the first data transmission apparatus and the second data transmission apparatus compare the priority of the first data transmission apparatus and the priority of the second data transmission apparatus,
the transmitting means of the first data transmission apparatus or the second data transmission apparatus, which is determined to have higher priority, starts the data transmission, and
the transmitting means of the first data transmission apparatus or the second data transmission apparatus, which is determined to have lower priority, cancels the data transmission.

**4.** (Amended) The data transmission system according to claim 1 or 2, wherein the predetermined protocol is MOST (Media Oriented Systems Transport) .

**5.** (Canceled)

**6.** (Amended) The data transmission system according to claim 1 or 2, wherein, when the new data transmission is performed, each transmitting means of the data transmission apparatus transmits data in the transmission frames transmitted from the other data transmission apparatus after rewriting it into data to be transmitted therefrom.

**7.** (Canceled)

**8.** (Amended) A data transmission method for transmitting data embedded in a transmission frame circulating in a network in one direction, in accordance with a predetermined protocol, in the network in which a plurality of data transmission apparatus are connected in a loop, wherein
the transmission frame has a field in which information for notifying that the data transmission is started is stored, as a part of a field in which the data is stored, comprising:
a notifying step of notifying other data transmission apparatus that data transmission is started when the data transmission is started;
a recognizing step of recognizing, in the plurality of data transmission apparatus, a part of the network used between a transmission source and a transmission destination in the network in data transmission, based on a notification by the notifying step;
a determining step of determining, in a data transmission apparatus which is going to start new data transmission, whether or not the part of the network recognized at the recognizing step coincides with a part of the network used between a transmission source and a transmission destination in the new data transmission, and
a transmitting step of starting the new data transmission if determination is made at the determining step that the part of the network recognized at the recognizing step does not coincide with the part of the network used between a transmission source and a transmission destination in the new data transmission.

**9.** (Amended) A data transmission apparatus, which is one of a plurality thereof provided in a ring network, for transmitting data embedded in a transmission frame circulating in the network in one direction, in accordance with a predetermined protocol, wherein
the transmission frame has a field in which information for notifying that the data transmission is started is stored, as a part of a field in which the data is stored, comprising:
notifying means for notifying other data transmission apparatus that data transmission is started, based on the information for notifying that the data transmission is started, when the data transmission is started,
recognizing means for recognizing, in the ring network, a part of the network being used between a transmission source and a transmission destination in the data transmission, based on a notification from the notifying means included in the other data transmission apparatus,
determining means for determining whether or not the part of the network recognized by the recognizing means coincides with a part of the network to be used between a transmission source and a transmission destination in new data transmission when the new data transmission is started while data transmission is performed by the other data transmission apparatus, and
transmitting means for transmitting new data if the determining means determines that the part of the network recognized by the recognizing means does not coincide with the part of the network to be used between a transmission source and a transmission destination in the new data transmission.
